# EUROPEAN PATENT APPLICATION

(11) **EP 4 803 657 A1**
(43) Date of publication of application: **09.09.2026**
(21) Application number: 24885655.1
(22) Date of filing: 28.10.2024
(51) Int. Cl.: C23F 1/20, H01G 11/06, H01G 11/68

(54) **METHOD FOR PRODUCING ALUMINUM PERFORATED FOIL**

(30) Priority: 31.10.2023 JP 2023186151
(71) Applicant: Mitsubishi Gas Chemical Company, Inc., Tokyo 100-8324 (JP)
(72) Inventor: SUGIMOTO, Takashi, Ashigarakami-gun, Kanagawa 258-0112 (JP); IKEDA, Kaduhiko, Ashigarakami-gun, Kanagawa 258-0112 (JP); MATSUYAMA, Yousuke, Ashigarakami-gun, Kanagawa 258-0112 (JP)
(74) Representative: Müller-Boré & Partner Patentanwälte PartG mbB
(86) International application number: PCT/JP2024/038324
(87) International publication number: WO 2025/094882

(57) **Abstract**

According to the present invention, it is possible to provide a method for producing an aluminum perforated foil which has a plurality of through holes penetrating therethrough in the thickness direction, the method including a through hole forming step in which an aqueous composition that contains 1-30 mass% of halide ions and 0.1-20 mass% of an oxidizing agent is brought into contact with the surface of an aluminum foil so as to form the through holes in the thickness direction of the aluminum foil.

## Description

### TECHNICAL FIELD

The present invention relates to a method for producing an aluminum perforated foil.

### BACKGROUND ART

In recent years, demands for electrical storage devices, in particular, lithium-ion capacitors (LICs), lithium ion secondary batteries (LIBs), and electric double layer capacitors (EDLCs), have been increased in applications including portable information terminals, portable electronic equipment, electric vehicles, hybrid electric vehicles, and stationary power storage systems. As current collectors to be used for positive or negative electrodes of these electrical storage devices, aluminum perforated foils with through holes formed therein for pre-doping with lithium ions are known.

For example, in lithium-ion capacitors, activated carbon similar to that used in electric double layer capacitors is used for positive electrodes, and carbon materials similar to those used in lithium ion secondary batteries are used for negative electrodes, thereby achieving a balance between high output density and high energy density. However, in order to achieve increase in capacity, it is necessary to efficiently perform pre-doping with lithium ions, and for this reason, aluminum perforated foils are formed with a large number of fine through holes formed therein.

As methods for forming fine through holes, etching technologies are known.

For example, Patent Document 1 describes a method for forming through holes in an aluminum foil by means of electrolytic etching, wherein an aqueous solution containing hydrochloric acid is used as an electrolytic solution.

Further, Patent Document 2 describes a method in which a film of aluminum oxide or aluminum hydroxide is formed on the surface of an aluminum foil; portions of the film where through holes are desired to be formed are removed by means of laser processing; and then through holes are formed in the aluminum foil by means of electrolytic etching, wherein an aqueous solution containing sulfuric acid and nitric acid is used as an electrolytic solution.

### PRIOR ART DOCUMENTS

### PATENT DOCUMENTS

Patent Document 1: Japanese Laid-Open Patent Publication No. 2011-208254
Patent Document 2: International Publication WO2017/163913 pamphlet

### SUMMARY OF THE INVENTION

### PROBLEMS TO BE SOLVED BY THE INVENTION

It has been desired to develop a technology for producing an aluminum perforated foil suitably used as a current collector for electrical storage devices using a simple and easy method.

### MEANS FOR SOLVING THE PROBLEMS

The present invention relates to a method for producing an aluminum perforated foil as described below.
<1> A method for producing an aluminum perforated foil which has a plurality of through holes penetrating therethrough in the thickness direction, the method including a through hole forming step in which an aqueous composition that contains 1 to 30% by mass of halide ions and 0.1 to 20% by mass of an oxidizing agent is brought into contact with the surface of an aluminum foil so as to form the through holes in the thickness direction of the aluminum foil.
<2> The method for producing an aluminum perforated foil according to item <1>, wherein the halide ions are chloride ions.
<3> The method for producing an aluminum perforated foil according to item <1>, wherein the oxidizing agent is at least one selected from the group consisting of hydrogen peroxide and nitric acid.
<4> The method for producing an aluminum perforated foil according to item <1>, wherein the aluminum foil has a thickness of 1 µm to 50 µm.
<5> The method for producing an aluminum perforated foil according to item <1>, wherein the aluminum purity of the aluminum foil is 98% by mass or more but less than 99.9% by mass.
<6> The method for producing an aluminum perforated foil according to any one of items <1> to <5>, wherein in the through hole forming step, the processing temperature is 10°C to 50°C and the processing time is 10 seconds to 150 seconds.

### ADVANTAGEOUS EFFECT OF THE INVENTION

According to the present invention, an aluminum perforated foil suitably used as a current collector for electrical storage devices can be produced by a simple and easy method using chemical etching.

### EMBODIMENTS FOR CARRYING OUT THE INVENTION

### 1. Method for Producing Aluminum Perforated Foil

The present invention relates to a method for producing an aluminum perforated foil which has a plurality of through holes penetrating therethrough in the thickness direction, and the method is characterized in that it includes a through hole forming step in which an aqueous composition that contains 1 to 30% by mass of halide ions and 0.1 to 20% by mass of an oxidizing agent is brought into contact with the surface of an aluminum foil so as to form the through holes in the thickness direction of the aluminum foil.

According to the present invention, through holes can be formed in an aluminum foil by a simple and easy method in which an aqueous composition containing specific components is brought into contact with the surface of the aluminum foil. According to a preferred embodiment, an aluminum perforated foil obtained has excellent uniformity in the hole diameter of through holes and can be suitably used as a current collector for electrical storage devices, in particular, as a current collector for lithium-ion capacitors.

The aluminum foil is not particularly limited as long as it is an alloy plate containing aluminum as a main component and a slight amount of a foreign element and can be used as a current collector for electrical storage devices. Examples of the foreign elements include Fe, Si, Cu, Mg, Zn, Ti, V, Ga, Cr, Zr, B, Mn, Ni, and Li.

The aluminum purity is not particularly limited, but it is preferably 98% by mass or more, and may be 98.5% by mass or more, 99% by mass or more, 99.3% by mass or more, 99.5% by mass or more, or 99.75% by mass or more. Further, the upper limit is not particularly limited and may be 100% by mass, but it is preferably less than 99.9% by mass, and may be less than 99.8% by mass, less than 99.7% by mass, less than 99.6% by mass, or less than 99.5% by mass.

As the aluminum foil, either a hard aluminum foil or a soft aluminum foil may be used. The aluminum foil is not particularly limited, but A1000 series and A8000 series are preferred, and A1N30, A8011, A8021, or A8079 may be used.

The thickness of the aluminum foil is preferably 50 µm or less, more preferably 40 µm or less, and even more preferably 25 µm or less. The lower limit of the thickness is not particularly limited, but it is usually 1 µm or more. When it is within the above-described range, the aluminum foil can be suitably used as a current collector for electrical storage devices, in particular, as a current collector for lithium-ion capacitors.

### <Through Hole Forming Step>

In the through hole forming step, an aqueous composition that contains 1 to 30% by mass of halide ions and 0.1 to 20% by mass of an oxidizing agent is brought into contact with the surface of the aluminum foil to form the through holes in the thickness direction of the aluminum foil.

The aqueous composition to be used in the through hole forming step contains 1 to 30% by mass of halide ions. The halide ions cause pitting corrosion of the passivation film of the aluminum foil, and it makes it possible to form through holes in the aluminum foil.

The type of the halide ions is not particularly limited, and may be, for example, fluoride ions, chloride ions, bromide ions, or iodide ions, but chloride ions are more preferred from the viewpoint of ease of handling and economic efficiency.

The halogen compound as the source of the halide ions to be used for the aqueous composition is not particularly limited. Examples thereof include a halide of an alkali metal such as sodium halide and potassium halide, a halide of an alkaline earth metal such as calcium halide, ammonium halide, copper halide, and hydrogen halide. Among them, a halide of an alkali metal or hydrogen halide is preferred, and hydrochloric acid or sodium chloride is more preferred from the viewpoint of more effective and reliable formation of through holes.

As the halogen compound, one material may be used solely, or two or more materials may be used in combination.

The content of the halide ions contained in the aqueous composition is 1% by mass to 30% by mass, preferably 2.0% by mass to 25% by mass, more preferably 3.0% by mass to 23% by mass, and particularly preferably 5.0% by mass to 20% by mass.

Further, the range of the content of the halide ions contained in the aqueous composition may have the lower limit of any one of 1.0% by mass, 2.0% by mass, 3.0% by mass, and 5.0% by mass, and the upper limit of any one of 30% by mass, 25% by mass, 23% by mass, and 20% by mass.

The aqueous composition to be used in the through hole forming step contains 0.1% by mass to 20% by mass of an oxidizing agent. The oxidizing agent is considered to have the action to promote a reaction with the halide ions, thereby contributing to the formation of through holes in the aluminum foil.

The type of the oxidizing agent is not particularly limited. Examples thereof include hydrogen peroxide, nitric acid, persulfate, peracetic acid, ozone, hypochlorite, chlorite, chlorate, perchlorate, chromate, and permanganate, but hydrogen peroxide and nitric acid are more preferred from the viewpoint of ease of handling and economic efficiency.

As the oxidizing agent, one material may be used solely, or two or more materials may be used in combination.

The content of the oxidizing agent contained in the aqueous composition is 0.1% by mass to 20% by mass, preferably 0.2% by mass to 15% by mass, more preferably 0.3% by mass to 12% by mass, and particularly preferably 0.5% by mass to 10% by mass.

Further, the range of the content of the oxidizing agent contained in the aqueous composition may have the lower limit of any one of 0.1% by mass, 0.2% by mass, 0.3% by mass, and 0.5% by mass, and the upper limit of any one of 20% by mass, 15% by mass, 12% by mass, and 10% by mass.

The aqueous composition may contain an additive as a component other than the halide ions and the oxidizing agent within a range in which the effects of the present invention are exerted. Examples of the additive include an organic solvent, a surfactant, and a pH adjuster. The concentration of the additive that may be contained in the aqueous composition is preferably 10% by mass or less, more preferably 5.0% by mass or less, even more preferably 2.0% by mass or less, and particularly preferably 1.0% by mass or less.

The aqueous composition contains water, in particular, ion-exchanged water or ultrapure water. The content of water is the remainder in the aqueous composition, and it is preferably 70% by mass or more, more preferably 80% by mass or more, and may be 85% by mass or more. The upper limit of the content of water is 98% by mass or less, and may be 95% by mass or less or 90% by mass or less.

The processing temperature (temperature of the aqueous composition) in the through hole forming step is preferably 10°C to 50°C, more preferably 20°C to 45°C, and even more preferably 30°C to 40°C. When the temperature of the aqueous composition is 10°C or higher, through holes can be efficiently formed in a short time. Meanwhile, when the temperature of the aqueous composition is 50°C or lower, the change in the liquid composition can be suppressed, and the etching conditions can be kept constant. Further, the operation can be performed safely.

The method for bringing the aqueous composition into contact with the aluminum foil is not particularly limited. For example, it is possible to employ a method of dropping (single wafer spin process), spraying (spray treatment) or the like of the aqueous composition, a method for contacting with the aluminum foil, or a wet etching method such as a method of immersing the aluminum foil in the aqueous composition.

The processing time in the through hole forming step is preferably 10 seconds to 150 seconds, more preferably 30 seconds to 140 seconds, and even more preferably 60 seconds to 120 seconds. The processing time may be suitably determined in consideration of various conditions such as the surface state of the aluminum foil, the content of the halide ions in the aqueous composition, the processing temperature, and the contact method. Thus, the present invention is excellent on the point that the formation of through holes progresses without taking a long time. In this regard, the processing time refers to the time for contacting the aqueous composition with the surface of the aluminum foil. For example, it is the time during which the aluminum foil is immersed in the aqueous composition, or the time from when the aqueous composition is sprayed on the surface of the aluminum foil to when the aqueous composition is removed by water or the like.

### <Water Washing Process>

Preferably, the aluminum foil in which through holes have been formed (i.e., aluminum perforated foil) is suitably washed with water according to need to remove the halide ions and the oxidizing agent adhering to the surface of the aluminum foil. The water is preferably water from which metal ions, organic impurities, particles, etc. have been removed by distillation, ion exchange treatment, filtering treatment, adsorption treatment or the like, and it is particularly preferably pure water or ultrapure water.

According to the above-described method, the aluminum perforated foil can be obtained just by substantially one-step chemical treatment or by further performing appropriate washing (e.g., washing with water) according to need. According to the present invention, the processing conditions are mild and the required time is short, and therefore the aluminum perforated foil can be efficiently produced. Further, according to a preferred embodiment of the present invention, the through holes can be formed with the hole diameters thereof being uniform, and the aluminum perforated foil is continuously processed using a roll-to-roll process in which a roll-shaped long current collector is passed through a conveyor line and continuously processed, thereby further improving production efficiency.

For example, a dropping device, spraying device or immersion device for the aqueous composition is installed between rolls of aluminum foil, and while an unprocessed aluminum foil is unrolled and moved from the roll on which the unprocessed aluminum foil is wound up using a roll-to-roll process, the aluminum foil is passed near the above-described device to supply the aqueous composition and optionally water for removing the aqueous composition, and the aluminum perforated foil with the through holes formed therein is wound up, thereby obtaining a roll. The obtained aluminum perforated foil may be subjected to drying treatment before being wound up on a roll.

### 2. Aluminum Perforated Foil

The aluminum perforated foil of the present invention is characterized in that it has a plurality of through holes penetrating therethrough in the thickness direction and that the thickness of the aluminum perforated foil is preferably 1 µm to 50 µm. The aluminum perforated foil of the present invention can be produced by the method described in "1. Method for Producing Aluminum Perforated Foil" above.

The thickness of the aluminum perforated foil is preferably 1 µm to 50 µm, more preferably 40 µm or less, and particularly preferably 25 µm or less. When the thickness is within the above-described range, the aluminum perforated foil can be suitably used as a current collector for electrical storage devices, in particular, as a current collector for lithium-ion capacitors.

The average diameter of the holes in the aluminum perforated foil is preferably 10 µm to 110 µm, more preferably 20 µm to 100 µm, and particularly preferably 23 µm to 96 µm. When the average diameter is within the above-described range, pre-doping with lithium ions can be efficiently performed, and the aluminum perforated foil can be suitably used as a current collector for lithium-ion capacitors.

The number of the holes in the aluminum perforated foil is preferably 0.5×10³ holes/cm² to 10×10³ holes/cm², more preferably 0.7×10³ holes/cm² to 7.0×10³ holes/cm², and particularly preferably 1.0×10³ holes/cm² to 5.0×10³ holes/cm². When the number of the holes is within the above-described range, the balance between tensile strength and pre-doping efficiency is good, and the aluminum perforated foil can be suitably used as a current collector for lithium-ion capacitors.

The aperture ratio of the aluminum perforated foil is preferably 26% or less, more preferably 10% or less, and particularly preferably 5.0% or less. The lower limit of the aperture ratio is preferably 0.2% or more, more preferably 0.5% or more, and even more preferably 0.7% or more. When the aperture ratio is within the above-described range, the balance between tensile strength and pre-doping efficiency is good, and the aluminum perforated foil can be suitably used as a current collector for lithium-ion capacitors.

The average pitch of the holes in the aluminum perforated foil is preferably 100 µm to 350 µm, more preferably 120 µm to 320 µm, and particularly preferably 140 µm to 310 µm. When the hole pitch is within the above-described range, the balance between tensile strength and pre-doping efficiency is good, and the aluminum perforated foil can be suitably used as a current collector for lithium-ion capacitors.

These physical properties can be measured according to the method described in the Examples.

### 3. Current Collector for Electrical Storage Devices

The current collector for electrical storage devices of the present invention is composed of the aluminum perforated foil of the present invention described above. In the current collector for electrical storage devices of the present invention, the aluminum perforated foil has a plurality of through holes penetrating therethrough in the thickness direction, and therefore, for example, when used for a lithium-ion capacitor, pre-doping with lithium ions can be efficiently performed in a short time and lithium ions can be dispersed more uniformly, and it makes it possible to cope with increase in capacity, and it is possible to provide an electrical storage device in which a balance between high output density and high energy density is achieved.

### EXAMPLES

Hereinafter, the features of the present invention will be described more specifically by way of working examples and comparative examples, but the scope of the present invention is not limited to the working examples below.

### <Analysis of holes>

The aluminum perforated foils obtained in the Examples and Comparative Examples were observed using an optical microscope (MX63L manufactured by Olympus Corporation) with the light from below that is attached to the device being turned on. The observation area was 3570 x 2230 µm. The obtained microscope images were binarized using an image analysis software (WinROOF2018 manufactured by Mitani Corporation), and the number of holes [holes/cm²], the average hole diameter [µm], the average pitch [µm], and the aperture ratio [%] in the observation area of 3570 x 2230 µm were calculated.

### (Number of Holes)

The number of holes [holes/cm²] was calculated using the following formula. $Number of holes \left[\frac{holes}{{cm}^{2}}\right] = \frac{Number of holes \left[holes\right]}{3570 \left[μm\right] \times 2230 \left[μm\right]} \times {10}^{8}$

### (Average Hole Diameter)

The average hole diameter [µm] was calculated using the following formula. $Average hole diameter \left[μm\right] = 2 \times \sqrt{\frac{Total area of holes \left[{μm}^{2}\right]}{Number of holes \left[holes\right] \times π}}$

### (Average Pitch)

The average pitch [µm] was calculated using the following formula. $Average pitch \left[μm\right] = \sqrt{\frac{3570 \left[μm\right] \times 2230 \left[μm\right] - Total area of holes \left[{μm}^{2}\right]}{Number of holes \left[holes\right]}}$

### (Aperture Ratio)

The aperture ratio [%] was calculated using the following formula. $Aperture ratio \left[%\right] = \frac{Total area of holes \left[{μm}^{2}\right]}{3570 \left[μm\right] \times 2230 \left[μm\right]} \times 100$

### (Example 1)

To 128 g of pure water, hydrogen peroxide (as an oxidizing agent) was added in an amount in which the final amount thereof became 0.5% by mass (2.8 g of 35% by mass hydrogen peroxide), and hydrochloric acid (as halide ions) was added in an amount in which the final amount thereof became 12% by mass (69 g of 35% by mass hydrochloric acid) to prepare an etching liquid (aqueous composition). An aluminum foil (A1N30 (soft), thickness: 20 µm, width: 30 mm, length: 30 mm) was immersed in the obtained etching liquid at the temperature and for the time shown in Table 1 below to perform etching process, and subsequently washed with water and then sufficiently dried to obtain an aluminum perforated foil. The holes of the obtained aluminum perforated foil were analyzed. The results regarding the number of holes [holes/cm²], the average hole diameter [µm], the average pitch [µm], and the aperture ratio [%] are shown in Table 1 below.

### (Examples 2 to 8)

An aluminum perforated foil was obtained in a manner similar to that in Example 1, except that the etching liquid used, the processing temperature, and the processing time were changed as shown in Table 1 below. The results regarding the number of holes [holes/cm²], the average hole diameter [µm], the average pitch [µm], and the aperture ratio [%] are shown in Table 1 below.

### (Example 9)

To 98 g of pure water, nitric acid (as an oxidizing agent) was added in an amount in which the final amount thereof became 10% by mass (33 g of 60% by mass nitric acid), and hydrochloric acid (as halide ions) was added in an amount in which the final amount thereof became 12% by mass (69 g of 35% by mass hydrochloric acid) to prepare an etching liquid (aqueous composition). An aluminum perforated foil was obtained in a manner similar to that in Example 1, except that the obtained etching liquid was used to perform etching process at the temperature and for the time shown in Table 1 below. The results regarding the number of holes [holes/cm²], the average hole diameter [µm], the average pitch [µm], and the aperture ratio [%] are shown in Table 1 below.

### (Comparative Example 1)

An aluminum perforated foil was obtained in a manner similar to that in Example 1, except that an etching liquid was prepared without using an oxidizing agent and that the processing temperature and the processing time were changed as shown in Table 1 below. The number of holes in the obtained aluminum perforated foil was zero.

**Table 1**

| | Etching process | | | | | Number of holes | Average hole diameter | Average pitch | Aperture ratio |
|---|---|---|---|---|---|---|---|---|---|
| | Oxidizing agent | | Halide ions | Temperature | Time | | | | |
| | Type | Concentration [wt%] | [wt%] | [°C] | [sec] | [holes/cm²] | [µm] | [µm] | [%] |
| Example 1 | H₂O₂ | 0.5 | 12 | 35 | 90 | 4.2×10³ | 23 | 153 | 1.7 |
| Example 2 | H₂O₂ | 0.5 | 20 | 30 | 60 | 1.0×10³ | 36 | 308 | 1.0 |
| Example 3 | H₂O₂ | 2 | 8 | 40 | 60 | 4.9×10³ | 29 | 140 | 3.2 |
| Example 4 | H₂O₂ | 3 | 7 | 30 | 60 | 2.2×10³ | 23 | 210 | 0.9 |
| Example 5 | H₂O₂ | 3 | 20 | 30 | 60 | 3.5×10³ | 96 | 146 | 25.3 |
| Example 6 | H₂O₂ | 5 | 5 | 30 | 60 | 1.5×10³ | 25 | 253 | 0.7 |
| Example 7 | H₂O₂ | 5 | 9 | 30 | 60 | 4.0×10³ | 40 | 155 | 5.0 |
| Example 8 | H₂O₂ | 10 | 5 | 30 | 60 | 1.2×10³ | 31 | 287 | 0.9 |
| Example 9 | HNO₃ | 10 | 12 | 30 | 120 | 1.6×10³ | 23 | 253 | 0.7 |
| Comparative Example 1 | - | 0 | 12 | 30 | 120 | 0 | - | - | - |

## Claims

1. A method for producing an aluminum perforated foil which has a plurality of through holes penetrating therethrough in a thickness direction, the method comprising a through hole forming step in which an aqueous composition that contains 1 to 30% by mass of halide ions and 0.1 to 20% by mass of an oxidizing agent is brought into contact with a surface of an aluminum foil so as to form the through holes in the thickness direction of the aluminum foil.

2. The method for producing an aluminum perforated foil according to claim 1, wherein the halide ions are chloride ions.

3. The method for producing an aluminum perforated foil according to claim 1, wherein the oxidizing agent is at least one selected from the group consisting of hydrogen peroxide and nitric acid.

4. The method for producing an aluminum perforated foil according to claim 1, wherein the aluminum foil has a thickness of 1 µm to 50 µm.

5. The method for producing an aluminum perforated foil according to claim 1, wherein an aluminum purity of the aluminum foil is 98% by mass or more but less than 99.9% by mass.

6. The method for producing an aluminum perforated foil according to any one of claims 1 to 5, wherein in the through hole forming step, a processing temperature is 10°C to 50°C and a processing time is 10 seconds to 150 seconds.
